(19) Europäisches Patentamt
European Patent Office
Office européen des brevets

(11) **EP 0 782 000 B1**

(12) **EUROPÄISCHE PATENTSCHRIFT**

(45) Veröffentlichungstag und Bekanntmachung des Hinweises auf die Patenterteilung:
**05.03.2003   Patentblatt 2003/10**

(51) Int Cl.⁷: **G01P 3/80**, G01P 3/68

(21) Anmeldenummer: **96120861.8**

(22) Anmeldetag: **24.12.1996**

(54) **Verfahren zur Geschwindigkeitsmessung mit Kombination von Zeitintervallmessung und Korrelation**

Speed measuring method combining time interval measurement with correlation

Procédé de détermination d'une vitesse avec combinaison de la mesure d'un intervalle de temps avec une corrélation

(84) Benannte Vertragsstaaten:
**AT CH FR GB IT LI NL**

(30) Priorität: **28.12.1995  DE 19549003**

(43) Veröffentlichungstag der Anmeldung:
**02.07.1997   Patentblatt 1997/27**

(73) Patentinhaber: **Motzko, Friedrich**
**86529 Schrobenhausen (DE)**

(72) Erfinder: **Motzko, Friedrich**
**86529 Schrobenhausen (DE)**

(74) Vertreter: **Haft, Uwe Michael et al**
**Patentanwälte**
**Haft, von Puttkamer,**
**Berngruber, Czybulka, Karakatsanis**
**Franziskanerstrasse 38**
**D-81669 München (DE)**

(56) Entgegenhaltungen:
| | |
|---|---|
| **EP-A- 0 582 112** | **WO-A-87/06349** |
| **DE-A- 2 133 942** | **US-A- 3 689 157** |
| **US-A- 3 824 015** | |

**Beschreibung**

Die Bestimmung der Geschwindigkeit eines Meßobjekts erfolgt am einfachsten aus den Definitionsgrößen Weg und Zeit: Entweder wird die Zeit gemessen, die das Meßobjekt zum Zurücklegen einer bestimmte Strecke benötigt oder die Strecke, die es in einer bestimmten Zeit zurücklegt, selten werden beide Größen bestimmt. Da Zeitmessungen einfacher durchzuführen sind als Wegmessungen, gibt man zumeist der ersten dieser Möglichkeiten den Vorzug, insbesondere dann, wenn die Trajektorie des Meßobjekts im Voraus bekannt ist. In diesem Falle gelingt es nämlich, Anfangs- und Endpunkt einer Meßstrecke mit Vorrichtungen zu überwachen, die die Anwesenheit des Meßobjekts an diesen Punkten detektieren und eine geeignete Zeitmeßeinrichtung steuern können.

Obgleich hier zur Messung der Geschwindigkeit nur die Messung einer Zeit erfolgt, ist doch auch die andere Definitionsgröße, der Weg, mit einem Fehler behaftet. Zeitmessungen lassen sich heute mit einer Genauigkeit durchführen, die die hier erforderliche weit übersteigt. Weitaus schwieriger ist es, die Meßstrecke genau genug zu definieren, d.h. genau genug - und auch schnell genug - zu bestimmen, auf welcher Seite von Anfangs- oder Endpunkt der Meßstrecke sich das Meßobjekt auf seiner Trajektorie gerade befindet.

Oberflächlich betrachtet läßt sich bei gegebenen absolutem Fehler von Weg und Zeit der Fehler der Geschwindigkeit beliebig verkleinern, wenn nur die Meßstrecke groß genug gemacht wird. Dies ist aber meist nicht praktikabel, schon allein, weil sich das Meßobjekt meist gar nicht beliebig lange beobachten läßt, und man auch nicht beliebig lange auf das Meßergebnis warten möchte. Weiter setzt eine Geschwindigkeitsmessung der hier besprochenen Art voraus, daß das Meßobjekt beim Zurücklegen der Meßstrecke seine Geschwindigkeit nicht ändert oder gar nach Überqueren des Anfangspunktes anhält und eine beliebige Zeit verweilt bevor es sich über den Endpunkt weiterbewegt. Bei Vergrößerung der Meßstrecke nimmt die Wahrscheinlichkeit des Auftretens solcher Fehler zu, und überdies werden deren Auswirkungen auf das Meßergebnis schwerwiegender.

Eine weitere, die Praxis betreffende Schwierigkeit ergibt sich daraus, daß mehrere Meßobjekte existieren können, wobei es möglich ist, daß bei Beginn einer Messung, also wenn ein Meßobjekt den Anfangspunkt der Meßstrecke überquert, sich weitere Meßobjekte auf der Meßstrecke befinden, ihren Endpunkt also noch nicht überquert haben. Dann überschneiden sich die Meßvorgänge für die einzelnen Meßobjekte zeitlich, und es wird erforderlich, die Ereignisse des Überquerens von Anfangs- und Endpunkt der Meßstrecke den einzelnen Meßobjekten zuverlässig zuzuordnen. So etwas ist aufwendig und fehlerträchtig, und man ist folglich bestrebt, die Meßstrecke so kurz wie irgend möglich zu gestalten, was wiederum eine möglichst hohe Genauigkeit der Definition von Anfangsund Endpunkt erfordert.

Dies sind Verhältnisse, die bei der Messung der Geschwindigkeit von Fahrzeugen im Straßenverkehr angetroffen werden. Führt man die Messung nicht gerade an Abzweigungen oder Kreuzungen oder auch auf Parkplätzen durch, so bewegen sich die Fahrzeuge fast immer auf wohldefinierten Fahrstreifen in einer von zwei wohldefinierten Richtungen. Zwar können Fahrstreifenwechsel vorkommen, doch ergeben sich dabei meist nur geringe Winkelabweichungen von der normalen Bewegungsrichtung, sodaß die daraus resultierenden Meßfehler klein bleiben.

Hingegen besteht hier das besondere Bedürfnis nach möglichst kurzen Meßstrecken, weil leider immer öfter Situationen auftreten, wo Fahrzeuge mit geringen Geschwindigkeiten in kleinen Abständen fahren und zudem zwischendurch immer wieder anhalten. Die Geschwindigkeitsmeßwerte, die eine Meßanordnung mit einer Meßstrecke in der Größenordnung einiger Meter liefert, besitzen in einer solchen Situation keinerlei Signifikanz mehr.

Es können aber auch recht hohe Geschwindigkeiten auftreten. Auf der Überholspur einer Autobahn wird nicht selten schneller als 200 km/h gefahren. Andererseits herrscht dort ebenso oft im Stau der s.g. *Stop-and-Go*-Verkehr. weshalb sich eine Vergrößerung der Meßstrecke zur genauen Messung hoher Geschwindigkeiten verbietet.

Es stellt sich also das Problem, Detektionseinrichtungen zu finden, mit denen sich Anfangsund Endpunkt einer möglichst kurzen Meßstrecke möglichst genau überwachen lassen, das heißt hier, zwei möglichst kurze Teilstücke der Trajektorie müssen auf Anwesenheit eines Fahrzeugs geprüft werden können. Weiterhin muß sich die Zeitdifferenz zwischen dem Ansprechen der Detektionseinrichtung am Anfang der Meßstrecke und jener am Ende möglichst genau bestimmen lassen. Eine hinreichende Bedingung hierfür ist die Möglichkeit, die Zeitpunkte des Ansprechens genau zu bestimmen, doch braucht dies nicht gefordert zu werden. Benötigt wird allein die Zeitdifferenz. Das ist für das hier vorgeschlagene Meßverfahren von entscheidender Bedeutung.

Eine Möglichkeit zur Fahrzeugdetektion stellen die bekannten in die Fahrbahn eingebetteten Induktionsschleifen dar. Da diese selbst aber in Fahrtrichtung schon einige Meter lang sind, kann damit eine Meßstrecke der hier geforderten Kürze nicht realisiert werden.

Eine weitere Möglichkeit bieten Radar- oder Mikrowellen-Meßeinrichtungen, welche Strahlen aussenden, die vom Fahrzeug reflektiert werden. Radar- oder Mikrowellen-Strahlen lassen sich weit feiner bündeln als ein Induktionsschleifen-Detektor ausgedehnt ist, jedoch wird mit der Größe der hier erzielbaren Meßfelder immer noch keine ausreichende Detektionsgenauigkeit erreicht. Gleiches gilt für Ultraschall-Verfahren.

Mit Detektionseinrichtungen auf optischer Basis könnte die gewünschte Genauigkeit erzielt werden. Die bekannten Verfahren haben jedoch für den Straßenverkehr spezifische Schwächen. Einfache Lichtschranken können nicht eingesetzt werden. Installiert man sie waagrecht mit dem Sender auf der einen Fahrbahnseite und dem Empfänger auf der anderen, dann werden so gut wie immer mehrere Fahrstreifen, m.a.W. mehrere Trajektorien gleichzeitig überwacht, ohne daß eine Möglichkeit zur Unterscheidung existiert. Zudem würde eine so eingesetzte Lichtschranke nur dann wirklich genau arbeiten, wenn die Fahrzeuge eine wohldefinierte senkrechte Vorderkante, ähnlich einem Schiffsbug besäßen. Bei modernen Personenwagen wird aber eine flache Keilform bevorzugt. Zudem führt jedes Fahrzeug aufgrund von Fahrbahnunebenheiten gewisse Nickbewegungen aus. All dies beeinträchtigt die Detektionsgenauigkeit wesentlich.

Ein Meßverfahren besonders für Sensoren dieser Art wird in der DE 30 22 356 A1 beschrieben. Die Schrift zeigt auch einige Maßnahmen zur Überwindung der genannten Schwierigkeiten auf: Fehlmessungen können dadurch auftreten, daß auf verschiedenen Fahrstreifen mehrere Fahrzeuge nahezu gleichzeitig die Meßeinrichtung passieren. Darum werden hier zwei Geschwindigkeitsmessungen unmittelbar nacheinander durchgeführt, und wenn sich dabei unvereinbare Werte ergeben, wird die Messung ignoriert.

Günstiger wären senkrecht installierte Lichtschranken. Damit können selektiv einzelne Fahrstreifen überwacht werden, und wohldefinierte waagrechte Vorderkanten existieren bei modernen Kraftfahrzeugen. Doch müßte hier der Sender über der Straße an einer Schilderbrücke o.ä. befestigt, und der Empfänger in die Fahrbahndecke eingebettet werden oder umgekehrt. Eine derartig aufwendige Installation beeinträchtigt die Brauchbarkeit einer Detektionseinrichtung jedoch bereits entscheidend, ganz abgesehen davon, daß der Lichtweg durch Verschmutzung blockiert werden kann.

Als Abhilfe wurden Reflexionslichtschranken vorgeschlagen, wo Sender und Empfänger beide über der Fahrbahn installiert werden. Der Sender emittiert hier ein schmales Lichtbündel; der Empfänger ist auf den dadurch auf der Fahrbahn erzeugten Lichtfleck ausgerichtet und reagiert auf dessen Helligkeitsänderung bei Beleuchtung eines Fahrzeugs anstelle der Straße. Dieses Konzept leidet aber stark unter der Tatsache, daß sich die Helligkeit des Lichtflecks bei Einfahrt eines Fahrzeugs nicht zwangsläufig (ausreichend) ändern muß. Da das beim Empfänger ankommende diffus reflektierte Licht recht schwach ist, wird eine große Verstärkung mit entsprechend hohem Rauschpegel erforderlich. Signaländerungen, die sich von diesem Rauschen nicht ausreichend abheben, sind zu häufig, als daß eine solche Reflexionslichtschranke als zuverlässig bezeichnet werden könnte.

Dem läßt sich begegnen, indem statt einer Reflexionslichtschranke eine optische Abstandsmeßeinrichtung eingesetzt wird, welche sowohl auf trigonometrischer Basis als auch über die Messung der Lichtlaufzeit funktionieren kann. Ein einfahrendes Fahrzeug deckt die Straße in einer gewissen Höhe ab, sodaß sich der Abstandsmeßwert ändern muß, solange nur das beim Empfänger ankommende Licht für eine Abstandsmessung ausreicht. Leider läßt sich aber auch dies nicht immer gewährleisten.

Beide oben diskutierten Lösungsansätze weisen zudem den Nachteil auf, daß sich damit nur ein Punkt des Fahrstreifens überwachen läßt, an dem Fahrzeuge, speziell schmale wie z.B. Motorräder einfach vorbeifahren können. Zwar läßt sich das Sendelichtbündel leicht quer zur Fahrtrichtung aufweiten, doch die Abbildung des dadurch erzeugten Lichtstreifens auf das Empfängerelement ist schwierig und verringert die Empfindlichkeit der Detektionseinrichtung wesentlich.

Lineare Überfahrsensoren, die quer zur Fahrtrichtung in die Fahrbahnoberfläche eingebettet werden und auf den Druck reagieren, den die Räder eines Fahrzeugs auf sie ausüben, bieten eine Alternative, bei der viele der oben beschriebenen Probleme vermieden werden. Damit läßt sich ein Überwachungsbereich realisieren, der in Fahrtrichtung nur etwa 1 cm, quer dazu jedoch die gesamte Fahrstreifenbreite umfaßt, wobei bei mehreren Fahrstreifen jeder einzelne selektiv überwacht werden kann.

Das bedeutet für die Geschwindigkeitsmessung, daß sich kleine Meßstrecken realisieren lassen, wobei sich die Trajektorie des Meßobjekts beträchtlich - vor allem weiter als es selbst breit ist - verschieben darf. Verschmutzungsprobleme ergeben sich kaum, nur dicke Schnee- oder Eisschichten beeinträchtigen die Empfindlichkeit. Obgleich zur Installation ein Schlitz in die Fahrbahndecke gefräst werden muß, gestaltet sich der Einbau doch wesentlich einfacher als der einer Induktionsschleife, speziell für eine Geschwindigkeitsmessung, wo mehrere Detektionseinrichtungen notwendig sind.

Solche linearen Überfahrsensoren sind z.B. die bekannten Piezo-Druckschläuche, die auch bereits zur Geschwindigkeitsmessung eingesetzt werden. Neuerdings sind aber auch Sensoren auf Lichtleiterbasis bekanntgeworden, die sich hierfür ebenfalls vorzüglich eignen.

Die Schrift WO 87/063 49 A1 beschreibt eine Meßanordnung mit solchen linearen Überfahrsensoren, auch solchen auf Lichtleiterbasis. Es wird vorgeschlagen, zwei Sensoren so miteinander zu verbinden, daß zwischen ihnen ein fester Abstand eingehalten wird, und diese Anordnung quer zum Fahrstreifen zu verlegen. Die Meßanordnung wird dadurch transportabel.

Eine gewisse Schwierigkeit bei der Anwendung linearer Überfahrsensoren besteht darin, daß die Signale, die beim Überfahren mehrerer Sensoren erzeugt werden, zwar qualitativ gleichartig sind, sich jedoch in ihren Amplituden meist unterscheiden, schon allein deshalb, weil es sich kaum sicherstellen läßt, daß die Sensoren immer gleich stark belastet werden. Damit diese Eigentümlichkeit keine Meßfehler hervorruft, sind besondere Maßnahmen zu treffen.

Aus dem Stand der Technik sind auch Korrelationsmeßverfahren bekannt.

Das Dokument US-A- 3 824 015 beschreibt eine Vorrichtung mit zwei Sensoren, bei der die Geschwindigkeit eines Objektes durch eine Korrelationsmessung bestimmt wird. Die Geschwindigkeit der Vorderkante des Objektes wird durch eine Zeitmessung ermittelt und einem Regelkreis als Startwert zur Verfügung gestellt. Mit Hilfe eines Vergleichs von jeweils zwei Korrelationswerten wird der Regelkreis auf einen Wert eingeregelt, der die gesuchte Geschwindigkeit repräsentiert.

Das Dokument DE-A- 2 133 942 beschreibt eine Vorrichtung mit zwei Sensoren, bei der die Geschwindigkeit eines Objektes ebenfalls durch eine Korrelationsmessung und einen Regelkreis bestimmt wird. Zur Vermeidung der Einstellung auf Nebenmaxima kann in einem Grobregelkreis, der einen dritten Sensor aufweist, eine Anfangsbedingung für den Regelkreis ermittelt werden.

Das hier vorgestellte Verfahren löst die Aufgabe, mit linearen Überfahrsensoren vorzugsweise im Straßenverkehr die Geschwindigkeit von Fahrzeugen zu messen, wobei die Meßanordnung in Fahrtrichung kürzer sein kann als der kleinste zu erwartende Achsabstand, weiterhin das Meßergebnis nicht von den Amplituden der beim Überfahren der einzelnen Sensoren erzeugten Signale abhängt, und außerdem die Signalverarbeitung ohne Einsatz kostspieliger Spezialkomponenten auf einem handelsüblichen preisgünstigen Mikroprozessor oder Mikrocontroller erfolgen kann.

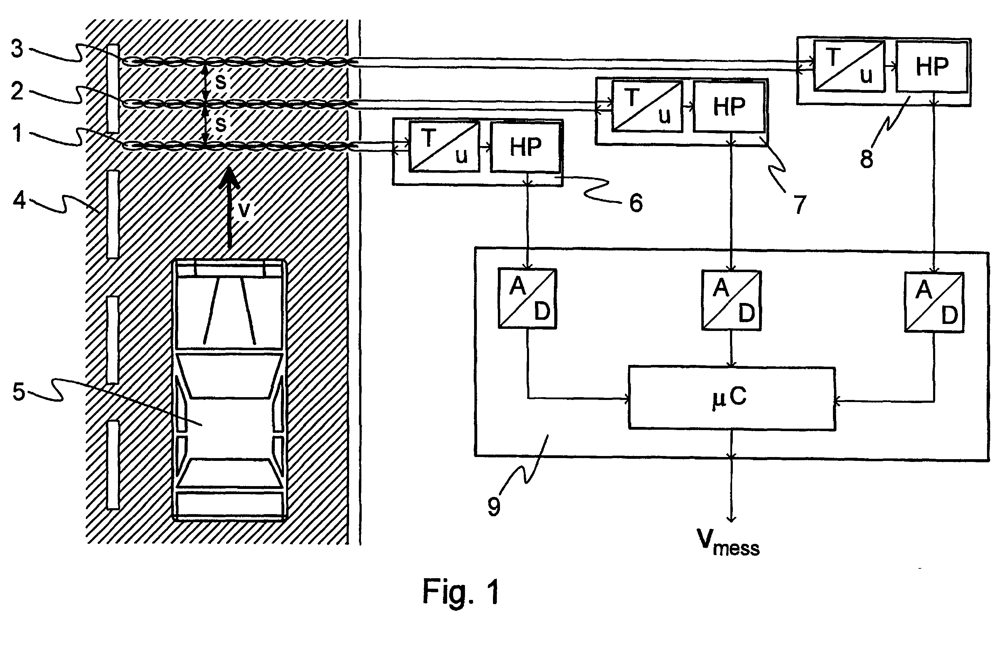

Fig. 1 zeigt schematisch die Meßvorrichtung. Das Verfahren erfordert mindestens drei Überfahrsensoren (1,2,3), die quer zur Fahrtrichtung über die gesamte Fahrstreifenbreite in die Fahrbahndecke (4) eingebettet sind. Ein Fahrzeug (5), das sich auf dem Fahrstreifen bewegt, wird also zuerst den Sensor 1, dann den Sensor 2 und zuletzt den Sensor 3 überfahren, wobei jedesmal ein Signal erzeugt wird. Der Abstand in Fahrtrichtung zwischen den einzelnen Sensoren s ist signifikant kleiner als der Achsabstand der Fahrzeuge, sodaß niemals ein Rad den Sensor 1 überfahren kann, bevor das vorhergehende Rad den Sensor 3 überfahren und damit den Überwachungsbereich der Meßanordnung verlassen hat.

Es ist nicht zwingend erforderlich, daß der Abstand zwischen Sensor 1 und Sensor 2 gleich dem Abstand zwischen Sensor 2 und Sensor 3 ist. Das Verfahren wird dadurch jedoch leichter verständlich, und es läßt sich kein Vorteil verschiedener Abstände erkennen. Die drei Überfahrsensoren sind (u.U. über nicht druckempfindliche Übertragungslichtleiter) mit Anpassungsvorrichtungen (6,7,8) verbunden, die nicht Gegenstand der Erfindung sind. Ihre Funktion soll aber zum besseren Verständnis kurz erläutert werden.

Ein Überfahrsensor enthält einen Lichtleiter, der wegen des besonderen Aufbaus des Sensors auf Druck mit einer Verringerung seiner Lichttransmission reagiert. Folgerichtig enthält die Anpassungsvorrichtung eine Lichtquelle, deren Licht in den Sensor eingekoppelt wird und einen Photodetektor, der von dem durch den Sensor geleiteten Licht beleuchtet wird. Der Photodetektor liefert ein elektrisches Signal, welches der transmittierten Lichtleistung proportional ist und sich auf herkömmliche Weise weiterverarbeiten läßt. Eine solche Anordnung - auch wenn sie für die Praxis weitaus komplizierter realisiert wird - stellt also einen Transmissions-Spannungs-Wandler oder Transmissions-Strom-Wandler dar (in Fig. 1 als T-u-Wandler aufgefaßt und gezeichnet).

Es ist günstig, dem T-u-Wandler einen Hochpaß nachzuschalten (HP in Fig. 1). Obwohl das nicht zwingend notwendig ist, sind doch existierende Anpassungsvorrichtungen so realisiert. Für das hier vorgeschlagene Meßverfahren wird dieses Hochpaßverhalten allerdings gefordert. Dabei braucht der "Hochpaß" nicht streng seiner elektrotechnischen Definition entsprechen, es muß jedoch eine Möglichkeit vorgesehen werden, dem Signal eines unbelasteten Überfahrsensors den Wert Null zuzuweisen, bzw. den Signalverlauf bei einer Überfahrt als Abweichung von diesem Wert anzugeben. Durch einen Hochpaß in der Anpassungsvorrichtung wird dies mit einfachen Mitteln erreicht.

Die von den Anpassungsvorrichtungen (6, 7, 8) aufbereiteten elektrischen Signale werden nun einer Signalverarbeitungseinrichtung (9) zugeführt. Diese läßt sich am einfachsten wie gezeichnet durch einen Mikrocontroller (μC) realisieren, der über eine Zeitmeßeinrichtung (nicht gezeichnet, da meist intern vorhanden) und für jedes der mindestens drei Signale über einen Analogeingang verfügt.

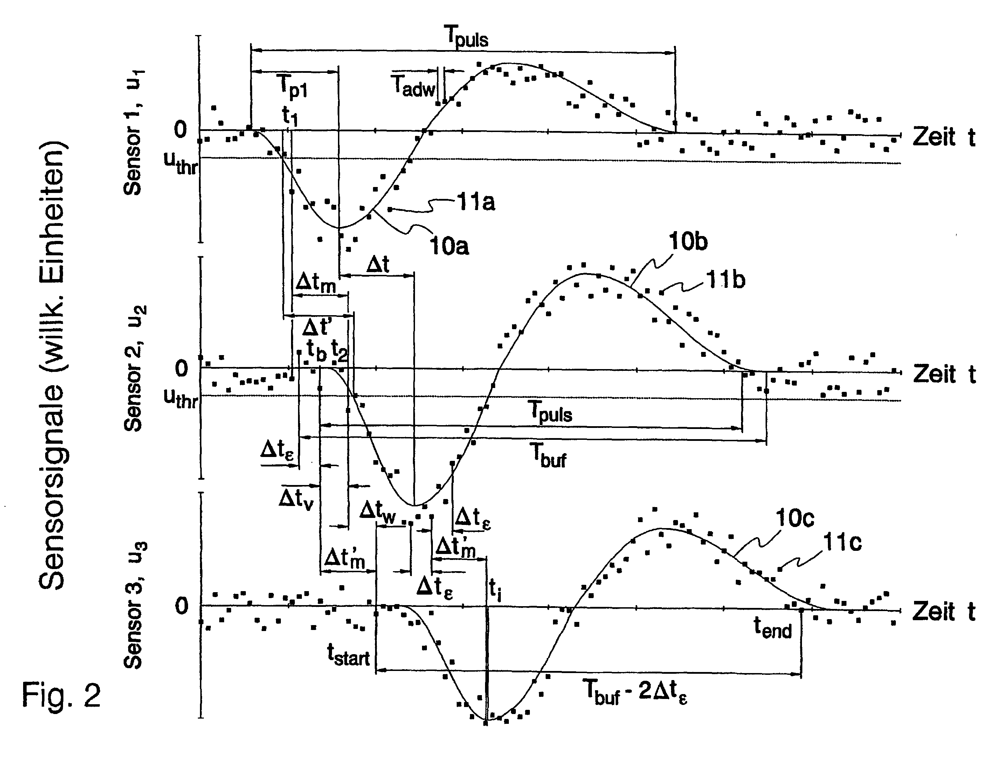

Fig. 2 zeigt die Signale, die die Überfahrsensoren mit den nachgeschalteten Anpassungsvorrichtungen erzeugen, wenn sie von einem Rad bzw. den Rädern einer Fahrzeugachse überrollt werden, und die durch das erfindungsgemäße Verfahren zu verarbeiten sind.

Die Kurven 10a, 10b und 10c sind als idealisierte Signalverläufe zu verstehen. Sie unterscheiden sich zunächst durch eine zeitliche Verschiebung um den Betrag

$$\Delta t = \frac{s}{v} \tag{1}$$

den es möglichst genau zu ermitteln gilt, um mit der bekannten Strecke s (vgl. Fig. 1) die unbekannte Geschwindigkeit v bestimmen zu können. Sie unterscheiden sich aber zusätzlich auch noch durch unterschiedliche Amplituden, weil es nahezu unmöglich ist, die Empfindlichkeit der Überfahrsensoren genau gleich zu halten.

Dieser Unterschied der Signalamplituden, der wohlgemerkt bereits bei idealisierten Signalverläufen vorhanden ist, bildet die Hauptschwierigkeit bei der Bestimmung von $\Delta t$ mit ausreichender Genauigkeit. Der Grund dafür ist letztlich, daß die Zeit $T_{p1}$, die das Signal zum Erreichen seines Minimums benötigt, in der Größenordnung der zu messenden Zeit $\Delta t$ liegt und nicht wesentlich verkürzt werden kann.

Gelänge dies, oder wären die Amplituden der Signale gleich, so könnte $\Delta t$ sehr einfach aus den Zeiten bestimmt werden, zu denen die Signale einen gewissen Schwellwert $u_{thr}$ unterschreiten. Man würde eine Zeitmeßvorrichtung starten, wenn z.B. das Signal des Sensors 1 den Schwellwert unterschreitet, und sie wieder anhalten sobald das Signal des Sensors 2 dies ebenfalls tut. Eine solche Vorgehensweise soll im Folgenden kurz als "Start-Stop-Verfahren" bezeichnet werden.

Wie aus Fig. 2 hervorgeht, mißt man damit unter den gegebenen Bedingungen jedoch nicht die Zeit $\Delta t$ sondern vielmehr die Zeit $\Delta t'$, die von $\Delta t$ theoretisch um bis zu $\pm T_{p1}$ verschieden sein kann. Da aber $\Delta t'$ und $T_{p1}$ etwa gleich groß werden können, ist leicht einzusehen, daß in einem solchen Fall ein nicht mehr tolerierbarer Meßfehler entsteht.

Könnten die Schwellwerte den Signalamplituden angepaßt werden, so ließe sich dieser Fehler kompensieren, doch müßten hierzu entweder die Amplituden im Voraus bekannt sein, oder man müßte die Signalverläufe zunächst abspeichern, dann die Amplituden bestimmen, daraus Schwellwerte ableiten, und zuletzt die abgespeicherten Signale auf Unterschreitung dieser Schwellwerte untersuchen. Bei einer derart aufwendigen Signalanalyse, die ja erst beginnen kann, wenn der Überrollvorgang bereits abgeschlossen ist, müßte man befürchten, daß noch während der Bearbeitung bereits der nächste Überrollvorgang beginnt.

Eine weitere Fehlerquelle resultiert daraus, daß der Signalverarbeitungseinrichtung (9) niemals idealisierte Signalverläufe zugeführt werden können. Die Signale sind immer zumindest mit Rauschen behaftet. Bei Einsatz eines Mikrocontrollers wie gezeichnet kommt noch hinzu, daß dieser keine stetigen Signale erhält, sondern einzelne Meßpunkte (11a, 11b, 11c) im zeitlichen Abstand $T_{adw}$ verarbeiten muß. Ein Start-Stop-Verfahren liefert also nicht einmal die Zeit $\Delta t'$, sondern die Zeit $\Delta t_m$, die gegenüber $\Delta t'$ mit einem zusätzlichen Fehler behaftet ist.

Diese Schwierigkeiten können durch Einsatz eines Korrelationsmeßverfahrens überwunden werden. Zur Messung von Zeitverzögerungen benutzt man die Tatsache, daß für zwei Signale $x(t)$ und $y(t)$, bei denen es sich um Wechselgrößen handelt, und für die gilt

$$x(t) = c \cdot y(t-\Delta t) \qquad\qquad (2)$$

die s.g. Kreuzkorrelationsfunktion

$$\Phi_{xy}(\tau) \;=\; \lim_{T\to\infty} \frac{1}{2T} \int\limits_{-T}^{T} x(t)\, y(t-\tau)\, dt \qquad\qquad (3)$$

für $\tau = \Delta t$ ein Maximum annimmt, und zwar auch dann, wenn beide Signale verrauscht sind. (In der Praxis findet die obige Definitionsgleichung allerdings keine Anwendung; es werden Näherungen benutzt.)

Hierauf beruhende Geschwindigkeits-Meßverfahren sind bekannt. Man mißt z.B. bei der Herstellung von Endlosmaterial (Papier, Textilien etc.) dessen Transportgeschwindigkeit auf diese Weise. Dazu beobachtet man mit zwei geeigneten Meßaufnehmern (z.B. Photodetektoren), die örtlich in Bewegungsrichtung gegeneinander versetzt angebracht sind, das transportierte Material, sodaß beide Meßaufnehmer zeitlich versetzt im Wesentlichen das gleiche Signal liefern. Das früher auftretende Signal wird dann um eine Zeit $\tau$ verzögert und mit dem anderen Signal kreuzkorreliert. Die Verzögerungszeit $\tau$ wird variiert, bis das Korrelationsergebnis ein Maximum erreicht. Sie entspricht dann der Zeit, die das Material vom ersten zum zweiten Meßaufnehmer benötigt.

Ein solches Meßverfahren ist für die vorliegende Meßaufgabe nicht geeignet, denn die Signalverläufe sind zeitlich nicht quasi-unendlich ausgedehnt. Es handelt sich vielmehr um einmalige Ereignisse, sodaß sich zur Variation der Verzögerungszeit gar keine Gelegenheit ergibt. Eine einzelne Kreuzkorrelation enthält aber keinerlei Information über die "wahre" Zeitverzögerung $\Delta t$ zwischen den beiden Signalen; diese Information ergibt sich erst aus dem Vergleich mit Kreuzkorrelationen, die mit anderen Werten von $\tau$ gewonnen wurden.

Man könnte nun wieder darauf sinnen, die Signalverläufe zu speichern, um später die Verzögerung $\tau$ rechnerisch zu variieren. Eine Abschätzung des hierfür nötigen Aufwands zeigt aber, daß dies eine sehr schlechte Lösung ist: Für eine Geschwindigkeitsmessung im Straßenverkehr wird meist eine Genauigkeit von $\pm 3$ km/h im Bereich von 0... 100 km/h und $\pm 3\%$ im Bereich von 100...250 km/h gefordert. Um nur eine Meßauflösung mit diesen Zahlenwerten zu erreichen, wären schon rund 70 Kreuzkorrelationen zu berechnen. Wählt man für die Meßstrecke s z.B. einen Wert von 30 cm, so ergibt sich bei 250 km/h ein maximal zulässiger Fehler für $\Delta t$ von etwa 130 µs. Dies ist folglich die Obergrenze für Zeit $T_{adw}$ zwischen den einzelnen Meßwerten. Bei einer Geschwindigkeit von 3 km/h beträgt $\Delta t$ 360

ms. Das heißt, es müßten allermindestens 2770 Meßwerte abgespeichert werden. Bedenkt man, daß dieser Aufwand mindestens zu verdoppeln ist, um eine akzeptable Meßgenauigkeit zu erreichen, so erscheint der Ansatz inakzeptabel.

Eine weitere Möglichkeit wird in der DE 30 30 229 A1 aufgezeigt. Hier wird ein Signalverlauf, der sich beim Passieren eines ersten (hier passiv-optischen) Sensors über eine gewisse Zeitspanne ergibt, analog abgespeichert. Das momentane Signal eines zweiten Sensors wird durch ein analoges Schieberegister geschoben, dessen Länge jener des Speichers für das erste Signal entspricht. Bei jeder neuen Messung wird nun analog eine Kreuzkorrelation zwischen den beiden Signalverläufen gebildet. Die Verzögerung $\tau$ wird somit durch das Verstreichen der Zeit selbst realisiert, und genau eine Zeit $t = s/v$ nach dem Festhalten des ersten Signalverlaufs durchläuft das Ergebnis der gebildeten Kreuzkorrelation ein Maximum.

Leider kann dieses Verfahren nicht ohne weiteres unter Zuhilfenahme eines heute üblichen Mikrocontrollers für eine Meßanordnung gemäß Fig. 1 benutzt werden. Die ausreichend genaue Berechnung einer Kreuzkorrelation erfordert die Berücksichtigung von mindestens 50 Meßwert-Paaren. Für den hier vorgesehenen Zweck darf die Meßfrequenz aber nicht kleiner als etwa 10 kHz gewählt werden. Da bei einer jeden Messung eine Kreuzkorrelation berechnet werden muß, wären hier die meisten preisgünstigen Mikrocontroller überfordert. Der Einsatz eines speziellen Korrelators soll aber vermieden werden.

Es gelingt, zur einfachen und doch genauen Messung der Verzögerung zwischen einmaligen Ereignissen ein digitales Korrelationsverfahren einzusetzen, wenn man es mit einem Start-Stop-Verfahren kombiniert. Der Grundgedanke dabei ist, daß ein Start-Stop-Verfahren einen Näherungswert für $\Delta t$ ($\Delta t_m$ in Fig. 2) liefern kann, mit dessen Hilfe sich die Anzahl der zu berechnenden Kreuzkorrelationen drastisch reduzieren läßt. Der weitere Gedankengang führt dazu, das Korrelationsverfahren nicht zur direkten Ermittlung des Wertes von $\Delta t$, sondern zur Korrektur des fehlerbehafteten Meßwerts $\Delta t_m$ zu benutzen. Wie sich zeigt, ergibt sich daraus ein Meßverfahren mit hoher Genauigkeit und auch sonst günstigen Eigenschaften.

Die in Fig. 2 dargestellten Signale der Meßanordnung gemäß Fig. 1 werden wie folgt verarbeitet:

Im Ruhezustand zwischen den einzelnen Überrollvorgängen werden nur die Signale der Sensoren 1 und 3 überwacht. Da ein Fahrzeug diese nicht "überspringen" kann, ist es zulässig und günstig, die Rechenleistung, die zur Überwachung des Sensors 2 erforderlich wäre, einzusparen. Die Erfassung der Meßwerte erfolgt in konstanten Zeitabständen $T_{adw}$.

Die Geschwindigkeitsmessung beginnt, sobald eines dieser beiden Signale den festen Schwellenwert $u_{thr}$ unterschreitet. Hier soll angenommen werden, daß der Überrollvorgang in der Richtung wie in Fig. 1 gezeichnet erfolgt. In entgegengesetzter Richtung funktioniert das Verfahren genauso, nur sind die Signale von Sensor 1 und Sensor 3 bei der Verarbeitung zu vertauschen.

Sobald zur Zeit $t_1$ die Schwellwertunterschreitung des Signals von Sensor 1 $u_1$ erfolgt, wird eine Zeitmessung gestartet, und statt Sensor 1 wird nun Sensor 2 überwacht. Die Meßwerte des Signals $u_2$ (11b) werden ab jetzt gespeichert, und zwar in einem Ringpuffer, dessen Größe so bemessen ist, daß er die während der Zeit $T_{puls}$ anfallenden Werte gut aufnehmen kann. Es ist günstig, hier etwas über $(T_{puls} + T_{p1})/T_{adw}$ Speicherstellen vorzusehen. $T_{buf}$ ist die Anzahl dieser Speicherstellen $n_{buf}$ dividiert durch die Zykluszeit $T_{adw}$.

Unterschreitet nun auch $u_2$ zur Zeit $t_2$ den Schwellwert $u_{th}$, wird die Zeit $\Delta t_m = t_2 - t_1$, die seit der Schwellwertunterschreitung von $u_1$ verstrichen ist, gespeichert. Wegen der festen Meßrate muß sie ein ganzzahliges Vielfaches von $T_{adw}$ sein, sie wird daher repräsentiert durch die Anzahl $n_m = \Delta t_m/T_{adw}$ der seitdem erfaßten Meßwerte.

Die Speicherstelle, an die der aktuelle Meßwert von $u_2$ zur Zeit $t_2$ geschrieben wurde sei $i_2$. Der Abfall des (idealisierten) Signals begann eine gewisse Zeit vorher. Es wird nun eine Speicherstelle $i_b$ markiert, von der man davon ausgehen kann, daß sie etwas vor diesem Signalabfall zur Zeit $t_b$ beschrieben wurde. Zu ihrer Ermittlung wird von $i_2$ eine konstante Zahl $n_v$ entsprechend einer Zeit $\Delta t_v$ subtrahiert. Da es sich bei dem Speicherbereich um einen Ringpuffer handelt errechnet sich $i_b$ zu

$$i_b = (i_2 + n_{buf} - n_v) \bmod n_{buf} \tag{4}$$

unter der Voraussetzung, daß die Speicherindizes im Bereich von 0 bis $n_{buf}$ liegen.

In gleicher Weise wird eine zweite Speicherstelle $i_e$ markiert, nach deren Beschreiben das Speichern des Signals $u_2$, das während der folgenden Verarbeitungsschritte ständig weiter durchgeführt wird, enden soll. Sie hat den Index

$$i_e = (i_b + n_{buf} - n_\varepsilon - 1) \bmod n_{buf} \tag{5}$$

Die konstante Zahl $n_\varepsilon$ entpricht einer Zeit $\Delta t_\varepsilon$, die wiederum der maximal möglichen Korrektur des Meßfehlers

für $\Delta t$ entspricht. Wie bereits angedeutet, wird bei den nun folgenden Meßzyklen das Signal $u_2$ weiterhin abgespeichert, und jedesmal überprüft, ob der Meßwert in die Speicherstelle $i_e$ geschrieben wurde. Falls ja, unterbleibt das Speichern fürderhin, sonst würden die nach der Zeit $t_2 - \Delta t_v - \Delta t_\varepsilon$ abgespeicherten Meßwerte überschrieben. Ab diesem Zeitpunkt kann wieder Sensor 1 überwacht werden, sodaß die Meßbereitschaft wieder hergestellt ist.

Anhand der bereits ermittelten Zeit $\Delta t_m$ kann nun abgeschätzt werden, wann der Abfall des Signals von Sensor 3 $u_3$ zu erwarten ist. Es folgt eine Wartezeit $\Delta t_w$, in der nichts weiter geschieht als das eben beschriebene Abspeichern der Meßpunkte. Diese ist

$$\Delta t_w = \Delta t'_m + \Delta t_v \tag{6}$$

wobei gilt

$$\Delta t'_m = \Delta t_m + c_j \cdot \Delta t_{adw} \tag{7}$$

Die Bedeutung von $c_j$ wird später klar werden; zunächst ist dieser Wert Null, sodaß $\Delta t'_m$ gleich $\Delta t_m$ ist. Der zugrundeliegende Gedankengang ist einfach zu verstehen: Ist das Signal von Sensor 2 um die Zeit $\Delta t_m$ gegen das von Sensor 1 verzögert, so sollte das von Sensor 3 die gleiche Verzögerung gegen das von Sensor 2 aufweisen, weil die beiden Strecken ($s$) gleich sind. Das wird natürlich nicht genau der Fall sein, da ja $\Delta t_m$ die Zeit zwischen den Schwellwertunterschreitungen der Signale $u_1$ und $u_2$ und nicht die gesuchte wahre Signalverzögerung $\Delta t$ ist, doch stellt $\Delta t_m$ anfänglich die beste Näherung dar.

Nach Verstreichen der Zeit $\Delta t_w$ wird auf die Signale $u_2$ und $u_3$ das nun beschriebene spezielle Korrelationsverfahren angewandt:

Die durch die bisherigen Verfahrensschritte herbeigeführte Situation ist die folgende: Wäre $\Delta t'_m$ gleich $\Delta t$ so wäre das Ergebnis des Ausdrucks

$$F(i_\Delta) = \sum_{k=0}^{n_{buf}-2i_\varepsilon-1} u_{3,k} \cdot u_{2,(i_b+i_\Delta+k+n_{buf}) \bmod n_{buf}} \tag{8}$$

für $i_\Delta = 0$ maximal. Darin sind $u_{3,k}$ die ab jetzt gemessenen $n_{buf} - i_\varepsilon$ Werte des Signals von Sensor 3 und $u_{2,...}$ die ab $t_b$ abgespeicherten Werte des Signals von Sensor 2.

Falls aber $\Delta t'_m$ wie zu erwarten von $\Delta t$ verschieden ist, so wird sich in gleicher Weise ebenfalls ein maximaler Wert für $i_\Delta \neq 0$ ergeben. Der Wert von $i_\Delta$, für den dies der Fall ist, sei $i_{\Delta,max}$.

Dann ist

$$\Delta t = \Delta t'_m - i_{\Delta,max} \cdot \Delta t_{adw} \; (\pm t_{adw}) \tag{9}$$

Die Ermittlung der Überfahrgeschwindigkeit aus $\Delta t$ soll - da Stand der Technik - nicht als Gegenstand der Erfindung aufgefaßt werden. Der Fachmann wird sie wohl nicht mit der Definitionsgleichung $v = s/\Delta t$ berechnen, sondern vielmehr zur Vermeidung der Division die Geschwindigkeitswerte einer gespeicherten Tabelle mit den Indizes $n_m + i_{\Delta,max}$ entnehmen.

Man ermittelt $i_{\Delta,max}$, indem man G1. für alle Werte von $i_\Delta$ aus dem Intervall $[-i_\varepsilon, +i_\varepsilon]$ berechnet. Der Aufwand dazu ist nicht groß, denn $\Delta t$ kann von $\Delta t'_m$ nicht allzu verschieden sein. Folglich kann auch $i_\Delta$ nicht besonders groß werden, und man kann $i_\varepsilon$ ebenfalls klein wählen. ($i_\varepsilon$ muß so klein gewählt werden, daß $\Delta t_\varepsilon$ auf jeden Fall kleiner als $\Delta t'_m$ bleibt, sonst wird versucht, G1. 8 auf Werte von $u_2$ anzuwenden, die noch gar nicht gemessen wurden. Dies ist bei der Dimensionierung der Meßstrecke $s$ zu beachten.)

Da weiterhin $i_\Delta$ nur im Index von $u_2$ auftaucht, ist es prinzipiell nicht erforderlich, die Meßwerte von $u_3$ abzuspeichern. Falls der eingesetzte Mikrocontroller schnell genug ist - das ist der Fall, wenn er über eine festverdrahtete Multiplikation verfügt - können, sobald ein neuer Wert für $u_3$ zur Verfügung steht, sämtliche Glieder $u_{3,k} \cdot u_{2,...}$ für alle Werte von $i_\Delta$ berechnet und zu den entsprechenden, bisher aufaddierten Summen hinzugezählt werden. Der Wert $u_{3,k}$ wird später nie wieder gebraucht.

Weiter läßt sich gleichzeitig das momentane Maximum und auch das Minimum der Summen $F(i_\Delta)$ bestimmen.

Aus dem Maximum läßt sich - noch während der Überfahrt über Sensor 3 ! - ein vorläufiges Meßergebnis ableiten, welches, je weiter die Überfahrt voranschreitet, immer genauer wird. Das Minimum zieht man, nachdem alle Summen aktualisiert sind, von diesen ab. Der maximale Wert bleibt dabei maximal, kein Wert wird negativ, aber ein Überlauf, der sonst sehr schnell eintreten würde, wird wirksam vermieden.

Die für jeden neuen Meßwert $u_{3,k}$ durchzuführenden Operationen lauten also zusammengefaßt:

$$F'_k(i_\Delta) = F_{k-1}(i_\Delta) + u_{3,k} \cdot u_{2,(i_b+i_\Delta+k+n_{buf})\bmod n_{buf}}$$

$$i_{\Delta,max} = \begin{cases} -i_\epsilon & \text{falls } i_\Delta = -i_\epsilon, \text{ sonst} \\ i_\Delta & \text{falls } F'_k(i_\Delta) > F'_k(i_{\Delta,max}) \\ i_{\Delta,max} & \text{sonst} \end{cases} \quad \left.\right\} \quad \text{für } i_\Delta = -i_\epsilon, -i_\epsilon+1, \ldots i_\epsilon$$

$$i_{\Delta,min} = \begin{cases} -i_\epsilon & \text{falls } i_\Delta = -i_\epsilon, \text{ sonst} \\ i_\Delta & \text{falls } F'_k(i_\Delta) < F'_k(i_{\Delta,min}) \\ i_{\Delta,min} & \text{sonst} \end{cases}$$

$$(10)$$

$$F_k(i_\Delta) = F'_k(i_\Delta) - F'_k(i_{\Delta,min}) \qquad \text{für } i_\Delta = -i_\epsilon, -i_\epsilon+1, \ldots i_\epsilon$$

Damit G1. 9 richtig ist, muß gelten

$$|\Delta t - \Delta t'_m| \le i_\epsilon \cdot \Delta t_{adw} \qquad\qquad (11)$$

weil für $|i_\Delta| > i_\epsilon$ der Index $(i_b + i_\Delta + k + n_{buf}) \bmod n_{buf}$ aus G1. 8 u.U. auf die falschen gespeicherten Meßwerte verweisen würde, und deshalb die Berechnung von G1. 8 für solche Werte von $i_\Delta$ vernünftigerweise unterbleibt.

Diese Forderung stellt aber keine ernste Einschränkung des Verfahrens dar, denn falls wirklich einmal z.B. $\Delta t > \Delta t'_m + i_\epsilon \cdot t_{adw}$ sein sollte, so wird $F(i_\Delta)$ für $i_\Delta = +i_\epsilon$ größer als für alle anderen Werte aus dem Intervall $[-i_\epsilon, +i_\epsilon]$. Der Wert für $\Delta t$ wird also gegenüber jenem von $\Delta t'_m$ auf jeden Fall verbessert.

Außerdem läßt sich aus dem Wert von $i_\Delta$ schließen, wie weit und vor allem in welche Richtung der Näherungswert $\Delta t'_m$ von $\Delta t$ abweicht. Das ist bedeutsam, weil diese Abweichung mit großer Wahrscheinlichkeit systematisch ist, bzw. einen systematischen Anteil aufweist, hervorgerufen durch einen systematischen Unterschied der Empfindlichkeiten von Sensor 1 und Sensor 2.

Ein solcher systematischer Anteil läßt sich aber kompensieren. Hier wird die Bedeutung des Parameters $c_j$ aus G1. 7 klar. Man benutzt als Näherungswert für $\Delta t$ eben nicht den mit dem Start-Stop-Verfahren ermittelten Wert $\Delta t_m$, sondern einen um den Betrag $c_j \cdot t_{adw}$ korrigierten Wert $\Delta t'_m$ Der Wert von $c_j$ wird nach jeder abgeschlossenen Geschwindigkeitsmessung korrigiert, etwa durch die Operation

$$c_{j+1} = \begin{cases} c_j + 1 & \text{falls } i_\Delta < -i_\epsilon/2 & (\Delta t'_m \text{ zu kurz}) \\ c_j - 1 & \text{falls } i_\Delta > i_\epsilon/2 & (\Delta t'_m \text{ zu lang}) \\ c_j & \text{sonst} \end{cases} \qquad (12)$$

wobei $j$ die laufende Nummer der Geschwindigkeitsmessung darstellen soll, ein Parameter, der nur der mathematisch sauberen Formulierung dient und nicht mitgeführt zu werden braucht.

Selbstverständlich ist G1. 12 nicht als starre Vorschrift zu betrachten, doch hat sich diese Operation in Simulationen bewährt und kann als Ausgangspunkt für eine weitere Optimierung dienen.

Durch diese Anpassung des Parameters $c_j$ wird das Verfahren in gewisser Weise "lernfähig". Ohne sie müßte $i_\epsilon \ge T_{p1}/\Delta t_{adw}$ gewählt werden, damit die Bedingung G1. 11 sicher erfüllt ist. Falls dann die Abweichung des Näherungswerts $\Delta t'_m$ von $\Delta t$ in hohem Maße systematisch wäre, würden sich die ermittelten Werte von $i_{\Delta,max}$ auf einen kleinen Teilbereich des Intervalls $[-i_\epsilon, +i_\epsilon]$ beschränken; alle übrigen Werte von $i_\Delta$ würden jedesmal umsonst bearbeitet.

Die Anpassung von $c_j$ erlaubt es, $i_\varepsilon$ so klein zu wählen, daß das Intervall nur noch dem maximalen zufälligen Meßfehler entspricht, der bei der Messung von $\Delta t$ durch das Start-Stop-Verfahren entsteht, und nicht dem Gesamtfehler. Der systematische Anteil, den letzterer zusätzlich besitzt, und der sich von Messung zu Messung nicht wesentlich ändern sollte, wird durch das Verfahren innerhalb weniger Messungen bestimmt und sodann ausgeglichen. Auch Fluktuationen der Sensorempfindlichkeiten, die sich mit der Zeit sicher ergeben werden, führen lediglich zu einer langsamen Änderung von $c_j$ und beeinflussen die Messung nicht.

Das erfindungsgemäße Verfahren besitzt also folgende vorteilhafte Eigenschaften:

- Lückenlose, selektive Überwachung einzelner Fahrstreifen,

- Die Bestimmung der Fahrtrichtung erfolgt ohne weitere Maßnahmen,

- Bereits zu Beginn der Überfahrt über den mittleren Sensor kann ein erster Näherungswert für die Geschwindigkeit ermittelt werden, für nachgeschaltete Auswertungseinrichtungen dürfte dies u.U. sehr hilfreich sein (Vorwarnung),

- Bereits während der Überfahrt über den dritten Sensor stehen ständig verbesserte Korrekturen dieses ersten Näherungswerts zur Verfügung,

- Bereits nach Beendigung der Überfahrt über den mittleren Sensor ist wieder volle Meßbereitschaft vorhanden,

- Nach Beendigung der Überfahrt über den dritten Sensor ist der Meßvorgang abgeschlossen, es ist keinerlei weitere Verarbeitung der Meßdaten mehr erforderlich,

- Durch obengenannte Eigenschaften ergibt sich eine außerordentlich hohe Funktionssicherheit.

Die Realisierung des Verfahrens wird durch die folgenden Eigenschaften wesentlich erleichtert:

- Die Meßstrecke ($s$, bzw. 2$s$) kann den erwarteten Geschwindigkeiten leicht angepaßt werden: Kurze Meßstrecken zur Verringerung des Einflusses von Geschwindigkeitsänderungen bei geringen Geschwindigkeiten, große Meßstrecken für genauere Messungen bei großen Geschwindigkeiten,

- Auch für große Geschwindigkeiten kann der Überwachungsbereich (die Strecke 2$s$) kürzer als jeder vorkommende Achsabstand gewählt werden, damit zu keiner Zeit zwei sich zeitlich überschneidende Überfahrvorgänge simultan bearbeitet werden müssen,

- Zu keiner Zeit ist die Überwachung von mehr als zwei Überfahrsensoren durch die Signalverarbeitungseinrichtung erforderlich, dieser geringe Aufwand ermöglicht hohe Meßraten und führt so zu hoher Meßgenauigkeit,

- In der Signalverarbeitungeinrichtung ist nur Speicherplatz für einen einzigen Überfahrvorgang über einen einzigen Sensor vorzusehen,

- Die zu messende Geschwindigkeit selbst hat keinen Einfluß auf den genannten Speicherbedarf,

- Die Einfachheit des Verfahrens und der geringe Hardwareaufwand führen sowohl in der Entwicklung als auch beim Produkt zu einer sehr kostengünstigen Lösung.

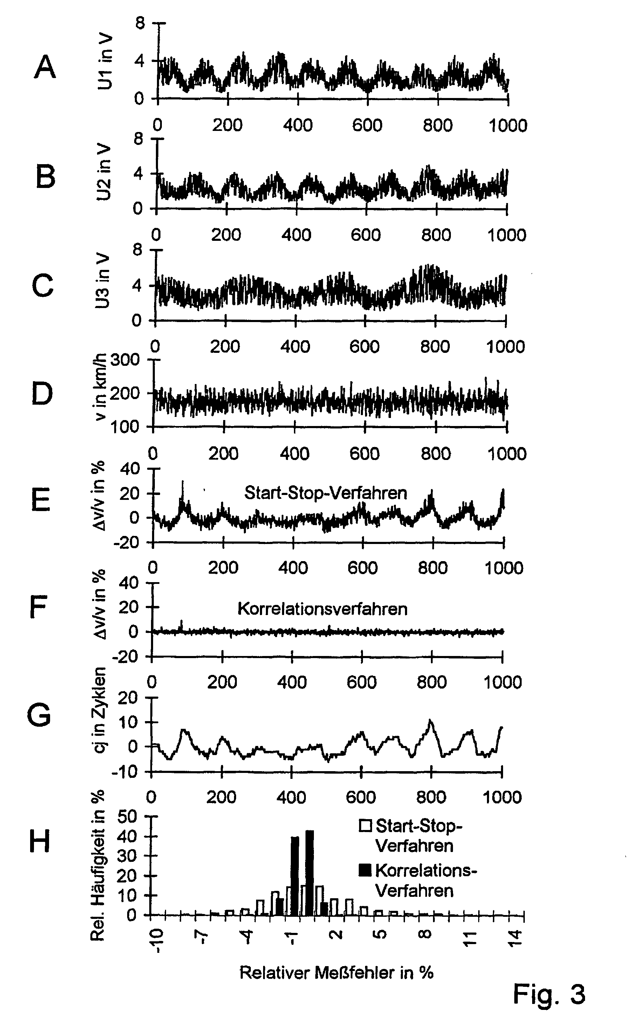

Zur Veranschaulichung des durch das Verfahren erzielten Effekts zeigt Fig. 3 die Ergebnisse einer Rechnersimulation von eintausend Überfahrten. Dazu wurde das beschriebene Auswerteverfahren auf jeweils drei Kurvenverläufe wie in Fig. 2 dargestellt angewandt, wobei die Amplituden und auch die Überfahrgeschwindigkeiten, d.h. der Zeitversatz zwischen den Kurven, in möglichst realistischer Weise variiert wurden.

Dabei wurde ein Meßaufbau angenommen, bei dem der Abstand $s$ zwischen den Sensoren 30 cm beträgt. Die Zeit $T_{puls}$ wurde zu 20 ms angenommen, die Zykluszeit $\Delta t_{adw}$ zu 70 µs. Die Diagramme A, B und C in Fig. 3 zeigen die Amplituden, genauer die negativen Ordinaten des Minimums des jeweiligen idealisierten Kurvenverlaufs für die einzelnen Sensoren. Sie besitzen eine quasi-periodische Komponente zur Simulation von Drifterscheinungen bei der Sensorempfindlichkeit und zusätzlich eine zufällige Komponente zur Simulation unterschiedlicher Fahrzeuggewichte und ähnlichen unvorhersehbaren Einflüssen. (Diese wurde per Zufallsgenerator erzeugt; dabei ergaben sich bei Sensor 1 und Sensor 2 ähnliche Frequenzen.) Zusätzlich wurde den Kurven ein zufälliges Rauschen mit einer Amplitude von 200 mV überlagert.

Diagramm D in Fig 3 zeigt die angenommenen Überfahrgeschwindigkeiten. Sie sind normalverteilt mit einem Mittelwert (Erwartungswert) von 175 km/h und einer Standardabweichung von 50 km/h, sollten also in etwa der Geschwindigkeitsverteilung auf der Überholspur einer Autobahn bei überaus sportlicher Fahrweise entsprechen.

In Diagramm E ist der relative Fehler aufgetragen, der sich ergibt, wenn zur Bestimmung der Geschwindigkeit die Zeit $\Delta t_m$ herangezogen wird. Er entspricht dem Fehler eines reinen Start-Stop-Verfahrens, mit dem bei gleicher Meßstrecke $s$ gerechnet werden müßte. Man erkennt, daß dieser Fehler einen systematischen Anteil aufweist, der mit den in Diagramm A und B aufgetragenen Signalamplituden der Sensoren 1 und 2 zusammenhängt.

Diagramm F zeigt demgegenüber den relativen Meßfehler bei Anwendung der erfindungsgemäßen Signalverarbeitung. Ein systematischer Anteil ist hier nicht mehr zu erkennen, und darüberhinaus ist auch der zufällige Anteil deutlich geringer.

Diagramm G zeigt den Parameter $c_j$, der sich im Laufe der Simulationsrechnung gemäß G1. 12 ergibt. Er ist offensichtlich mit dem Meßfehler des Start-Stop-Verfahrens in Diagramm E korreliert. Daraus darf geschlossen werden, daß der systematische Anteil des Meßfehlers in der Tat durch die Anpassung von $c_j$ eliminiert wird.

In Diagramm H sind Statistiken für die in den Diagrammen E und F gezeigten Meßfehler dargestellt. Der Unterschied zwischen den Verfahren wirkt hier weniger beeindruckend als beim Vergleich der Diagramme E und F; das rührt daher, daß hier im wesentlichen die Verteilung der kleineren Meßfehler hervorgehoben wird, die ein Meßverfahren nicht so disqualifizieren können wie das -wenn auch relativ seltene -Auftreten extrem großer Fehler, die zu völlig unglaubhaften Ergebnissen führen. Ein Vergleich der Abszisse in Diagramm H mit den Ordinaten in den Diagrammen E und F zeigt schon, daß die volle Fehlerspannweite, die sich ohne Anwendung des erfindungsgemäßen Verfahrens ergibt, in Diagramm H gar nicht aufgetragen ist.

Man erkennt aber ebenso, daß das erfindungsgemäße Signalverarbeitungsverfahren-dessen wahre Stärke offensichtlich in der Vermeidung extrem großer Meßfehler liegt - auch im Bereich kleinerer Fehler das Verhalten der erfindungsgemäßen Meßanordnung mit all ihren großen Vorteilen wesentlich verbessert.

**Patentansprüche**

1. Verfahren zur Bestimmung der Geschwindigkeit von einzelnen Meßobjekten, die sich auf einer im Voraus bekannten Trajektorie bewegen, mit folgenden Merkmalen:

   a) Erfassung der Anwesenheit des Meßobjekts (5) an mindestens drei verschiedenen Punkten der Trajektorie durch gleichartige Sensoren (1,2,3), welche beim Passieren des Meßobjekts (5) gleichartige analoge Meßsignalverläufe (10a,10b,10c bzw. 11a,11b,11c), bei Nichtanwesenheit eines Meßobjekts (5) hingegen Null-signale liefern,

   b) Bestimmung der Zeit, welche das Meßobjekt (5) zum Zurücklegen der Strecke zwischen einem ersten (1) und einem zweiten Sensor (2) benötigt durch Starten oder Ablesen einer Zeitmeßeinrichtung, sobald das Meßsignal (11a) des ersten Sensors (1) um einen gewissen Betrag vom Nullsignal verschieden ist, und Stoppen oder Ablesen der Zeitmeßeinrichtung, sobald das Meßsignal (11b) des zweiten Sensors (2) um einen gewissen Betrag vom Nullsignal verschieden ist,

   c) Speichern des Meßsignalverlaufs (11b), welcher sich ergibt, wenn das Meßobjekt (5) den zweiten Sensor (2) passiert,

   d) Beim Passieren eines dritten Sensors (3) Berechnung des Werts der Kreuzkorrelationsfunktion zwischen dem jetzt auftretenden Meßsignalverlauf(11c) und dem gemäß Merkmal c) abgespeicherten (11b) in der Weise, daß das aktuelle Meßsignal (11c) mit jenem Meßsignal (11b) korreliert wird, das der zweite Sensor (2) eine gewisse Verzögerungszeit vorher erfaßt hat, deren Verhältnis zu der gemäß Merkmal b) gemessenen Zeit gleich dem Verhältnis der Strecke zwischen dem zweiten (2) und dem dritten Sensor (3) zu der Strecke zwischen dem ersten (1) und dem zweiten Sensor (2) beträgt, und in gleichartiger Weise Berechnung weiterer Werte der gleichen Kreuzkorrelationsfunktion unter Variation der Verzögerungszeit,

   e) Ermittlung der Lage des Maximums der gemäß Merkmal d) berechneten Werte der Kreuzkorrelationsfunktion,

   f) Ermittlung eines genauen Meßwerts für die Zeit, die das Meßobjekt (5) zum Zurücklegen der Strecke vom zweiten (2) bis zum dritten Sensor (3) benötigt hat, durch Korrektur der in Merkmal d) definierten Verzögerungszeit mit Hilfe der gemäß Merkmal e) ermittelten Lage des Maximums der Werte der Kreuzkorrelationsfunktion,

g) Heranziehen des gemäß Merkmal f) ermittelten Zeitmeßwerts zur Bestimmung der Geschwindigkeit des Meßobjekts (5) anhand der bekannten Strecke zwischen dem zweiten (2) und dem dritten Sensor (3).

2. Verfahren nach Anspruch 1, **dadurch gekennzeichnet, daß** aus der gemäß Merkmal e) ermittelten Lage des Maximums der Werte der Kreuzkorrelationsfunktion ein Korrekturwert für die Verzögerungszeit fiir die Berechnung der Kreuzkorrelationsfunktion gemäß Merkmal d) abgeleitet wird, welcher die Verzögerungszeit bei den nächsten Messungen so beeinflußt, daß die erforderliche Korrektur gemäß Merkmal f) möglichst klein wird.

3. Verfahren nach einem der obigen Ansprüche, **dadurch gekennzeichnet, daß** zur Vereinfachung des Auswertungsverfahrens der Abstand zwischen dem ersten (1) und dem zweiten Sensor (2) gleich dem Abstand zwischen dem zweiten (2) und dem dritten Sensor (3) ist.

4. Verfahren nach einem der obigen Ansprüche, **dadurch gekennzeichnet, daß** zur Vereinfachung des Auswertungsverfahrens sowohl der Abstand zwischen dem ersten (1) und zweiten Sensor (2) als auch der Abstand zwischen dem zweiten (2) und dritten Sensor (3) kleiner ist als der kleinste jemals auftretende Abstand zwischen zwei Meßobjekten (5).

5. Verfahren nach einem der obigen Ansprüche, **dadurch gekennzeichnet, daß** bereits aus der gemäß Merkmal b) ermittelten Zeit und der Strecke zwischen dem ersten (1) und dem zweiten Sensor (2) ein erster Geschwindigkeitsmeßwert mit reduzierter Genauigkeit abgeleitet wird.

6. Verfahren nach einem der obigen Ansprüche, **dadurch gekennzeichnet, daß** zur Bestimmung der Geschwindigkeit von Kraftfahrzeugen oder rollenden Flugzeugen lineare Überfahrsensoren (1,2,3) quer zur Trajektorie in die Fahr- bzw. Rollbahndecke (4) eingebettet sind, wobei jedes Rad bzw. jede Achse als eigenes Meßobjekt gilt.

7. Verfahren nach Anspruch 6, **dadurch gekennzeichnet, daß** als Überfahrsensoren (1,2,3) faseroptische Belastungssensoren eingesetzt werden.

**Claims**

1. Procedure for determining the speed of individual test objects that move on a trajectory known in advance with the following properties:

a) Recording of the presence of the test object (5) on at least three different points of the trajectory by means of similar sensors (1, 2, 3), which deliver similar analogous test signal outcomes (10a, 10b, 10c and 11a, 11b, 11c) when passing the test object, but deliver no signals in the absence of a test object (5).

b) Determination of the time that the test object (5) requires to go the distance between the first sensor (1) and the second sensor (2) by starting or reading a time-interval measuring device as soon as the test signal (11a) of the first sensor (1) differs from a zero signal by a certain amount and as soon as the test signal (11b) of the second sensor (2) differs from the zero signal by a certain amount.

c) Storing of the test signal outcomes (11b) that result when the test object (5) passes by the second (2).

d) As the test object passes by a third sensor (3), the calculation of the value of the cross correlation function between the then occurring test signal outcome (11c) and the one stored (11b) in accordance with property (c), in such a way that the actual test signal (11c) is correlated with each test signal (11b) and that, before this, the second sensor (2) recorded a certain delay time whose relation to the time measured in accordance with property (b) is equal to the ratio of the distance between the second sensor (2) and the third sensor (3) to the distance between the first sensor (1) and second sensor (2), and, in a similar way, the calculation of further values of the same correlation function when varying the delay time.

e) Determination of the position of the maximum of the values of the correlation function calculated in accordance with property (d).

f) Determination of an accurate test value for the time that the test object (5) takes to go the distance from the second sensor (2) to the third sensor (3) by means of the correction of the delay time defined in property (d) with the aid of the property of the maximum of the values of the cross correlation function ascertained in accordance with property (e).

g) Taking into consideration the time test values determined in accordance with property (f) for the determination of the speed of the test object (5) by using the known distance between the second sensor (2) and the third sensor (3).

2. Procedure according to claim 1, **characterized by** the fact that a corrected value for the delay time which influences the delay time in the next measurements in such a way that the necessary correction is as small as possible in accordance with property (f) for the determination of the cross correlation function in accordance with property (d) is derived from the position of the maximum of the values of the cross correlation function in accordance with property (e).

3. Procedure according to one of the above claims, **characterized by** the fact that--to simplify the assessment procedure--the distance between the first sensor (1) and the second sensor (2) is equal to the distance between the second sensor (2) and third sensor (3).

4. Procedure according to one of the above claims, **characterized by** the fact that--to simplify the assessment procedure--both the distance between the first sensor (1) and the second sensor (2) and the distance between the second sensor (2) and the third sensor (3) is smaller than the smallest distance occurring between two test objects (5).

5. Procedure according to one of the above claims, **characterized by** the fact that a first speed test value with reduced accuracy is derived from the time determined in accordance with property (b) and the distance between the first (1) and second sensors (2).

6. Procedure according to one of the above claims, **characterized by** the fact that linear overrun sensors (1, 2, 3) are embedded in the road surface and runway surface (4) traverse to the trajectory to determine the speed of vehicles or rolling airplanes, whereby each tire and axle is treated as an individual test object.

7. Procedure according to claim 6, **characterized by** the fact that faser-optical load sensors are implemented as overrun sensors (1, 2, 3).

**Revendications**

1. Procédé destiné à déterminer la vitesse de différents objets de mesure se déplaçant sur une trajectoire connue à l'avance et doté des caractéristiques suivantes :

a) détecter la présence de l'objet de mesure (5) en au moins trois points différents de la trajectoire au moyen de capteurs (1, 2, 3) du même type, lesdits capteurs fournissant l'évolution des signaux de mesure (10a, 10b, 10c, voire 11a, 11b, 11c) analogues de même type lors du passage de l'objet de mesure (5) et des signaux zéro en l'absence d'un objet de mesure (5),

b)déterminer le temps nécessaire à l'objet de mesure (5) pour parcourir la distance entre un premier (1) et un deuxième capteur (2) en démarrant ou en lisant un chronomètre dès que le signal de mesure (11a) du premier capteur (1) diffère du signal zéro d'un certain montant et en arrêtant ou lisant le chronomètre dès que le signal de mesure (11b) du deuxième capteur (2) diffère du signal zéro d'un certain montant,

c) mémoriser l'évolution du signal de mesure (11b) obtenu lorsque l'objet de mesure (5) passe le deuxième capteur (2),

d) lors du passage sur un troisième capteur (3), calculer la valeur de la fonction d'intercorrélation entre l'évolution actuelle du signal de mesure (11c) et celle (11b) mémorisée selon la caractéristique c) de manière à ce que le signal de mesure actuel (11c) soit corrélé au signal de mesure (11b) détecté un certain temps de retard auparavant par le deuxième capteur (2), le rapport entre ledit temps de retard et le temps mesuré selon la caractéristique b) équivalant au rapport entre la distance entre le deuxième (2) et le troisième capteur (3) et la distance entre le premier (1) et le deuxième capteur (2), et, de manière semblable, calculer d'autres valeurs de la même fonction d'intercorrélation en variant le temps de retard,

e) déterminer la position du maximum des valeurs de la fonction d'intercorrélation calculées selon la caractéristique d),

f) déterminer une valeur de mesure exacte pour le temps pris par l'objet de mesure (5) pour parcourir la distance séparant le deuxième (2) du troisième capteur (3) en corrigeant le temps de retard défini dans la caractéristique d) à l'aide de la position du maximum des valeurs de la fonction d'intercorrélation déterminée selon la caractéristique e),

g) prendre en considération la valeur de mesure du temps déterminée selon la caractéristique f) en vue de déterminer la vitesse de l'objet de mesure (5) à l'aide de la distance connue entre le deuxième (2) et le troisième capteur (3).

2. Procédé selon la revendication 1, **caractérisé en ce qu'**une valeur de correction pour le temps de retard est déduite de la position du maximum des valeurs de la fonction d'intercorrélation déterminée selon la caractéristique e) pour calculer la fonction d'intercorrélation selon la caractéristique d), ladite valeur de correction influençant le temps de retard lors des mesures suivantes de telle manière que la correction nécessaire selon la caractéristique f) en soit réduite au minimum.

3. Procédé selon l'une des revendications précédentes, **caractérisé en ce que**, pour simplifier le procédé d'évaluation, la distance entre le premier (1) et le deuxième capteur (2) équivaut à la distance entre le deuxième (2) et le troisième capteur (3).

4. Procédé selon l'une des revendications précédentes, **caractérisé en ce que**, pour simplifier le procédé d'évaluation, la distance entre le premier (1) et le deuxième capteur (2) et la distance entre le deuxième (2) et le troisième capteur (3) sont toutes deux inférieures à la plus petite distance qui puisse jamais séparer deux objets de mesure (5).

5. Procédé selon l'une des revendications précédentes, **caractérisé en ce qu'**une première valeur de mesure de vitesse est déjà déduite, avec une précision réduite, du temps déterminé selon la caractéristique b) et de la distance entre le premier (1) et le deuxième capteur (2).

6. Procédé selon l'une des revendications précédentes, **caractérisé en ce que**, pour déterminer la vitesse de véhicules automobiles ou d'avions roulants, des capteurs linéaires (1, 2, 3) sont intégrés dans le revêtement de la chaussée ou de la piste de roulement (4), en travers de la trajectoire, chaque roue ou axe constituant en soi un objet de mesure.

7. Procédé selon la revendication 6, **caractérisé en ce que** les capteurs (1, 2, 3) utilisés sont des capteurs de charge à fibre optique.

Fig. 1

Sensorsignale (willk. Einheiten)

Fig. 2

EP 0 782 000 B1

Fig. 3